# EUROPÄISCHE PATENTSCHRIFT

(11) **EP 2 220 398 B1**
(45) Veröffentlichungstag und Bekanntmachung des Hinweises auf die Patenterteilung: **13.08.2014**
(21) Anmeldenummer: 08760917.8
(22) Anmeldetag: 12.06.2008
(51) Int. Cl.: B60K 17/16, F16H 48/10, F16H 48/11, F16H 48/30, F16H 48/20

(54) **PLANETEN-DIFFERENZIALGETRIEBE UND VERFAHREN ZUR STEUERUNG EINES DERARTIGEN GETRIEBES**
PLANETARY DIFFERENTIAL GEARING AND METHOD FOR CONTROLLING A GEARING OF SAID TYPE
BOITE DIFFERENTIELLE A ENGRENAGES PLANETAIRES ET PROCEDE DE COMMANDE D'UNE TELLE BOITE

(30) Priorität: 21.07.2007 DE 102007034118
(43) Veröffentlichungstag der Anmeldung: 25.08.2010
(73) Patentinhaber: Schaeffler Technologies GmbH & Co. KG, 91074 Herzogenaurach (DE)
(72) Erfinder: BIERMANN, Thorsten, 96193 Wachenroth (DE); METTEN, Norbert, 91086 Aurachtal (DE)
(86) Internationale Anmeldenummer: PCT/EP2008/057376
(87) Internationale Veröffentlichungsnummer: WO 2009/013065

(56) Entgegenhaltungen:
- JP-A- H11 315 905
- JP-A- 2006 283 780
- US-A- 3 768 336
- US-A1- 2005 266 952
- HOEHN B-R ET AL: "KOMPAKTES ACHSGETRIEBE FUER FAHRZEUGE MIT FRONTANTRIEB UND QUER EINGEBAUTEM MOTOR" ATZ AUTOMOBILTECHNISCHE ZEITSCHRIFT, VIEWEG PUBLISHING, WIESBADEN, DE, Bd. 108, Nr. 1, 1. Januar 2006 (2006-01-01), Seiten 46-51, XP001238419 ISSN: 0001-2785

## Beschreibung

### Gebiet der Erfindung

Die vorliegende Erfindung betrifft ein Planeten-Differenzialgetriebe mit den Merkmalen des Oberbegriffs des Anspruchs 1. Die Erfindung betrifft weiterhin ein Verfahren zur Steuerung eines derartigen Getriebes mit den Merkmalen des Oberbegriffs des Anspruchs 5.

In Kraftfahrzeugen werden zum Ausgleich unterschiedlicher Drehzahlen bei parallel angetriebenen Rädern oder Wellen, die mit einer gemeinsamen Antriebswelle verbunden sind, meist Ausgleichsgetriebe verwendet, die auch als Differenzialgetriebe bezeichnet werden. Derartige Differenzialgetriebe werden seit langem bei Fahrzeugantrieben verwendet, um bei einer angetriebenen Achse die Drehzahldifferenzen zwischen den Rädern bei Kurvenfahrt auszugleichen. Das betrifft sowohl Fahrzeuge mit Frontantrieb, mit Heckantrieb als auch solche mit zwei oder mehr angetriebenen Achsen. Darüber hinaus können derartige Differenziaigetriebe auch als Ausgleichsgetriebe zwischen mehreren angetriebenen Achsen zum Einsatz kommen. Die bekannteste Bauform derartiger Differenzialgetriebe sind die sog. Kegelraddifferenziale, die es sowohl als einfache Ausgleichsgetriebe als auch als sog. Sperrdifferenziale gibt. Diese Sperrdifferenziale existieren in den unterschiedlichsten Ausführungsformen, bspw. als sog. selbst sperrende Differenziale (Lamellensperrdifferenziale oder sog. Visko-Sperrdifferenziale). Darüber hinaus sind auch steuerbare Sperrdifferenziale bekannt geworden, mit deren Hilfe ein variabler Sperrgrad eingestellt werden kann.

Neben den seit langem bekannten Kegelrad-Differenzialen gibt es seit einiger Zeit eine alternative Bauform in Gestalt eines Planetengetriebes. Ein solches Stirnraddifferenzial mit Innenverzahnung ist in dem Fachartikel "Kompaktes Achsgetriebe für Fahrzeuge mit Frontantrieb und quer eingebautem Motor", ATZ 01/2006, S. 46-51, beschrieben. Da bei einem solchen Ausgleichsgetriebe das Drehmoment auf einem relativ großen Durchmesser übertragen wird, treten bei gleichen Raddrehmomenten kleinere Verzahnungskräfte zwischen den miteinander kämmenden Zahnrädern auf. Somit ermöglicht ein solches Stirnrad-Differenzial wahlweise die Übertragung größerer Drehmomente, die Reduzierung der Baugröße oder eine Kombination dieser Effekte.

Bei manchen Antriebskonfigurationen von Kraftfahrzeugen, insbesondere bei allradgetriebenen Fahrzeugen mit mehr als einer angetriebenen Achse, kann es wünschenswert sein, eine variable Verteilung des Antriebsmoments des Motors auf die Räder vorzusehen, bspw. in Abhängigkeit vom aktuellen Radschlupf bei feuchter oder rutschiger Fahrbahn. Neben herkömmlichen Systemen mit selbst sperrenden Verteilergetrieben, die bspw. eine sog. Visko-Kupplung aufweisen können, finden sich in vielen Fahrzeugen zunehmend sog. aktive Systeme, bei denen sich mittels geeigneter Steuerungseingriffe in den Antriebsstrang gezielte Verteilungen der Antriebsmomente auf die einzelnen Achsen und/oder Räder des Fahrzeugs erreichen lassen. Werden den beiden Rädern einer Achse durch geeignete Maßnahmen unterschiedliche Antriebsmomente zugewiesen, lassen sich hierdurch gezielt Giermomente um die Hochachse des Fahrzeugs erzeugen, was insbesondere für Systeme zum Ausgleich instabiler Fahrzustände eine sehr vorteilhafte Eingriffsmöglichkeit in die Fahrdynamik darstellen kann. Während solche Maßnahmen in der Vergangenheit auf die Aktivierung der Fahrzeugbremsen der einzelnen Räder beschränkt waren, ist es mit neueren Systemen zusätzlich möglich, an einzelne Räder gezielt erhöhte oder verminderte Antriebsmomente und/oder Motorschleppmomente zu leiten. Derartige Systeme und ihre Funktionsweise sind in der Fachwelt auch unter den Begriffen "Torque Vectoring" oder "Active Yaw" bekannt.

Neben dem erwähnten Sicherheitsaspekt kann die gezielte Verteilung der Antriebsmomente auf einzelne Räder einer Achse auch der Verbesserung der Traktion dienen, so dass derartige Differenzialgetriebe seit einiger Zeit bei Kraftfahrzeugen eingesetzt werden, bei denen die kurvenäußeren Räder beim Beschleunigen mit zusätzlichem Antriebsmoment beaufschlagt werden können.

Derartige Antriebssteuerungen finden sich bspw. in der US 2005/0159264 A1 sowie in der US 2006/0052198 A1. Gemeinsames Merkmal dieser Systeme sind Kupplungsanordnungen, die mit Differenzialgetrieben zusammenwirken. Dies können z.B. mechanische Lamellenkupplungen oder auch hydraulische Kupplungen sein. Gemeinsames Merkmal der bekannten Systeme ist allerdings, dass diese sehr aufwändig sind, sowohl was die mechanischen Komponenten betrifft als auch hinsichtlich ihrer Sensorik und der verwendeten Steuerungs- und Regelungseinrichtungen. Des weiteren benötigen diese Konstruktionen vergleichweise großen Bauraum.

Dokument US 3 768 336 wird als nächstliegender Stand der Technik angesehen und offenbart den Oberbegriff des Anspruchs 1.

Eine Aufgabe der vorliegenden Erfindung wird darin gesehen, ein kompaktes und einfach aufgebautes Planeten-Differenzialgetriebe zur Verfügung zu stellen und ein solches Differenzial dahin gehend weiterzuentwickeln, dass es als sog. "aktives Differenzial" fungieren kann.

Diese Aufgabe wird durch den Gegenstand des unabhängigen Anspruchs gelöst. Merkmale vorteilhafter Weiterbildungen der Erfindung ergeben sich aus den abhängigen Ansprüchen.

Ein Planeten-Differenzialgetriebe gemäß vorliegender Erfindung umfasst ein Antriebsstirnrad mit Außenverzahnung und einen drehfest damit verbundenen, im Nabenbereich des Antriebsstirnrades angeordneten Planetenträger, der wenigstens ein Paar miteinander kämmender Planetenzahnräder trägt. Jedes der wenigstens zwei Planetenzahnräder steht mit jeweils einem, jeweils drehfest mit einer Abtriebswelle verbundenem Sonnenrad mit Außenverzahnung in kämmendem Eingriff. Wahlweise können stattdessen die Planetenräder auch mit einem Hohlrad mit Innenverzahnung in kämmendem Eingriff stehen. Das Planeten-Differenzialgetriebe weist wenigstens eine Überlagerungsstufe auf, die wenigstens ein Losrad umfasst, das jeweils mit einer Abtriebswelle und mit einem Hohlrad in kämmendem Eingriff steht. Dieses Hohlrad ist drehfest mit dem Antriebsstirnrad verbunden. Weiterhin ist wenigstens eine steuerbare Kupplung vorgesehen, die eine Wirkverbindung zwischen dem Losrad mit der Abtriebswelle herstellen kann. Mit Hilfe dieses Getriebes kann eine variable Aufteilung eines Antriebsmoments auf zwei Abtriebsmomente erreicht werden, so dass durch gezielten Kupplungseingriff wahlweise die Traktion eines Antriebsrades verbessert und/oder ein Giermoment um eine Fahrzeughochachse erzeugt werden kann.

Gemäß einer Ausgestaltung der Erfindung ist die wenigstens eine steuerbare Kupplung zwischen dem wenigstens einen Losrad und der Abtriebswelle angeordnet. Auf diese Weise kann mit der Kupplung das Losrad gegenüber der Abtriebswelle abgebremst werden, wodurch auf Basis der Übersetzung der Planetenstufe ein vermindertes Antriebsmoment auf die jeweils betroffene Abtriebswelle bzw. eine niedrigere Drehzahl an der jeweiligen Radseite bereitgestellt wird. An der zur Kupplung gegenüberliegenden Radseite wird ein erhöhtes Antriebsmoment bzw. eine höhere Drehzahl übertragen. Mit dieser Maßnahme kann somit wahlweise die Traktion des Fahrzeugs verbessert und/oder ein Giermoment um die Fahrzeughochachse eingeleitet werden.

Gemäß einer nicht beanspruchten alternativen Ausgestaltung ist die wenigstens eine steuerbare Kupplung zwischen dem wenigstens einen Losrad und einer Gehäuseabstützung angeordnet. Bei dieser Variante erfolgt mittels der Kupplung eine Abbremsung des Losrades, wodurch ein Kraftschluss zwischen dem Antriebsstirnrad über das Hohlrad auf die entsprechende Abtriebswelle hergestellt werden kann.

Eine Ausführungsform des erfindungsgemäßen Planeten-Differenzialgetriebes sieht zwei Überlagerungsstufen vor, deren jeweils wenigstens eines Losrad mit jeweils einer der beiden Abtriebswellen sowie mit dem mit dem Antriebsstirnrad gekoppelten Hohlrad in kämmendem Eingriff steht. Bei Anwendungen in Kraftfahrzeugen sind vorzugsweise zwei derartige Überlagerungsstufen mit jeweils wenigstens einer Kupplung in jeder dieser Überlagerungsstufen vorgesehen, so dass eine symmetrische Verteilung der Momente ermöglicht ist.

Wahlweise kann auch jeweils zwischen jedem Sonnenrad und der jeweiligen Abtriebswelle und/oder jeweils zwischen jedem Losrad und dem Hohlrad eine steuerbare Kupplung angeordnet sein. Bei einer weiteren alternativen Ausführungsvariante des Planeten-Differenzialgetriebes kann vorgesehen sein, dass nur eine Kupplung, insgesamt zwei, drei oder vier steuerbare Kupplungen vorgesehen sind. Mittels wenigstens zwei solcher Kupplungen können bereits die gewünschten Eingriffe in eine Fahrzeugdynamik erreicht werden, insbesondere die Umlenkung des Antriebsmomentes auf einzelne Räder und damit die Einleitung eines Giermomentes um die Fahrzeughochachse. Die erwähnten verschiedenen Möglichkeiten der Anordnung der Kupplungen haben in erster Linie Einfluss auf die Drehzahlunterschiede, denen die Kupplungsscheiben oder - lamellen ausgesetzt sind.

Jede der Kupplungen kann vorzugsweise stufenlos in ihrem Schlupfgrad einstellbar sein. Wahlweise kann jede einzelne der Kupplungen separat hinsichtlich ihres Schlupfgrades steuerbar sein. Auf diese Weise ist eine sehr präzise Steuerung bzw. Regelung der Momentenverteilung zwischen den beiden Abtriebswellen des Getriebes und damit zwischen den Rädern der angetriebenen Achse ermöglicht.

Die vorliegende Erfindung umfasst weiterhin ein Verfahren zum Betrieb eines Planeten-Differenzialgetriebes, insbesondere eines Getriebes gemäß der zuvor beschriebenen Ausführungsvariante. Bei diesem Steuerungsverfahren werden vorzugsweise mehrere Parameter erfasst und ausgewertet, die fahrdynamische Zustände des Fahrzeugs charakterisieren können, bspw. die Messwerte von Beschleunigungs- und/oder Drehratensensoren, die Messwerte eines Lenkwinkelsensors sowie Drehzahl-, Drehmoment- und/oder Lastwerte einer Antriebsmaschine. Durch Steuerung wenigstens einer Kupplung, vorzugsweise jedoch beider Kupplungen der beiden Überlagerungsgetriebe des Planeten-Differenzialgetriebes lassen sich die Antriebs- und/oder Schleppmomente des Antriebsmotors je nach Bedarf individuell auf die beiden Abtriebswellen verteilen, so dass durch entsprechende Weiterleitung dieser Momente auf die betroffenen Antriebsräder weitgehende Eingriffe in das fahrdynamische Verhalten des Fahrzeugs ermöglicht sind. Im Wesentlichen beruhen diese Eingriffe darauf, dass unterschiedliche Giermomente um die Fahrzeughochachse eingeleitet werden können.

Wenn im vorliegenden Zusammenhang davon die Rede war, dass ein Antriebsstirnrad mit Außenverzahnung vorhanden ist, so ist dies grundsätzlich nicht einschränkend zu verstehen, da der Fachmann ggf., je nach zur Verfügung stehendem Bauraum und/oder sonstiger Umgebungsparameter, auch andere Bauformen des Antriebsstirnrades wählen kann, bspw. solche mit Innen- oder Kegelverzahnungen. Wenn zudem davon die Rede war, dass die Abtriebswellen mit Sonnenrädern mit Außenverzahnungen gekoppelt sind, so ist dies ebenfalls nicht einschränkend zu verstehen, da der Fachmann ggf. auch statt Sonnenrädern mit Außenverzahnungen Hohlräder mit Innenverzahnungen vorsehen kann. Auch die Wahl dieser zur Verfügung stehenden Varianten hängt in erster Linie vom zur Verfügung stehenden Bauraum sowie von weiteren Bauteilparametern der sonstigen Getriebebauteile ab. Auch hinsichtlich der verwendeten Überlagerungsgetriebe und der Anordnung der Kupplungen innerhalb der Getriebe existieren eine Reihe von Freiheitsgrade, was die Verwendung von Bauformen von miteinander im Eingriff befindlichen Zahnrädern sowie deren Anordnung zueinander, deren Lagerung und ihrer sonstigen Konfiguration im Getriebe betrifft.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
- Fig. 1: zeigt ein Funktionsprinzip einer ersten nicht beanspruchten Variante eines Planeten-Differenzialgetriebes.
- Fig. 2: zeigt ein weiteres Funktionsprinzip der ersten Variante des Getriebes gemäß Fig. 1 zur Verdeutlichung dessen Funktionsweise.
- Fig. 3: zeigt ein Funktionsprinzip einer zweiten erfindungsgemäßer Variante eines Planeten-Differenzialgetriebes.
- Fig. 4: zeigt ein weiteres Funktionsprinzip der zweiten Variante des Getriebes gemäß Fig. 3 zur Verdeutlichung dessen Funktionsweise.
- Fig. 5: zeigt ein Funktionsprinzip einer dritten Variante eines nicht beanspruchten Planeten-Differenzialgetriebes.
- Fig. 6: zeigt ein weiteres Funktionsprinzip der dritten Variante des Getriebes gemäß Fig. 5 zur Verdeutlichung dessen Funktionsweise.

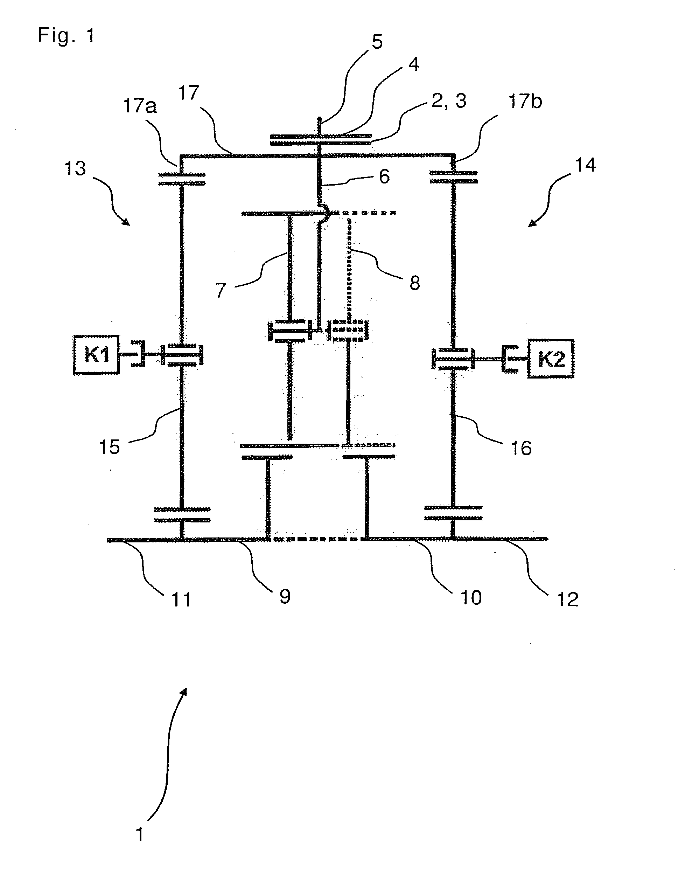

Die schematischen Darstellungen der Figuren 1 bis 6 verdeutlichen jeweils den Aufbau und die Funktionsweise verschiedener Ausführung von Planeten-Differenzialgetrieben, die jeweils als Stirnraddifferenziale ausgeführt sind. Jede der drei gezeigten Varianten weist jeweils ein zweiteiliges Überlagerungsgetriebe auf, das jeweils mit einer von zwei Abtriebswellen in Wirkverbindung steht und jeweils eine steuerbare Kupplung zur Beeinflussung der Verteilung der wirksamen Momente auf die Abtriebswellen dient.

Ein als Stirnraddifferenzial ausgebildete Planeten-Differenzialgetriebe 1 weist ein Antriebsstirnrad 2 mit Außenverzahnung 3 auf, das mit einem hier nicht näher spezifizierten Zahnrad 4 in kämmendem Eingriff steht. Dieses Zahnrad 4 kann bei einem frontgetriebenem Fahrzeug mit Frontmotor und damit in Baueinheit gekoppeltem Getriebe bspw. mit einer Getriebeausgangswelle 5 drehfest verbunden sein. Bei einem heckgetriebenen Fahrzeug mit Frontmotor kann die Welle 5 bspw. eine herkömmliche Antriebswelle sein, die üblicherweise eine Rotationsachse aufweist, die parallel zur Fahrzeuglängsrichtung verläuft.

Das Antriebsstirnrad 2 weist weiterhin einen drehfest mit der Außenverzahnung verbundenen Planetenträger 6 auf, der eine Summenwelle dieses Umlaufgetriebes darstellt. Der Planetenträger 6 verteilt das in das Antriebsstirnrad 2 eingeleitete Drehmoment auf die beidseitig paarweise angeordneten Planeten 7 und 8. Die Planeten 7 und 8 eines Paares stehen jeweils mit der halben Zahnbreite miteinander im Eingriff. Die äußeren Hälften der Planeten 7 und 8 kämmen mit zwei außenverzahnten Sonnenrädern 9 bzw. 10. Diese beiden Sonnenräder 9 und 10 leiten das Drehmoment jeweils in die Abtriebswellen 11 und 12 weiter. Die Abtriebswellen 11 und 12 sind bei einem Einsatz des Getriebes 1 als Achsdifferenzial mit den Achswellen (nicht dargestellt) des Fahrzeugs verbunden, welche als Antriebsachsen für die Räder der betreffenden Achse fungieren.

Der beschriebene Aufbau des Getriebes 1 mit den oben erwähnten Bauteilen (Bezugsziffern 2 bis 12) ist bei allen drei in den Figuren 1 bis 6 gezeigten Ausführungsformen identisch. Die Getriebe unterscheiden sich allerdings hinsichtlich der nachfolgend beschriebenen Überlagerungsstufen, denen jeweils eine steuerbare Kupplung zugeordnet ist.

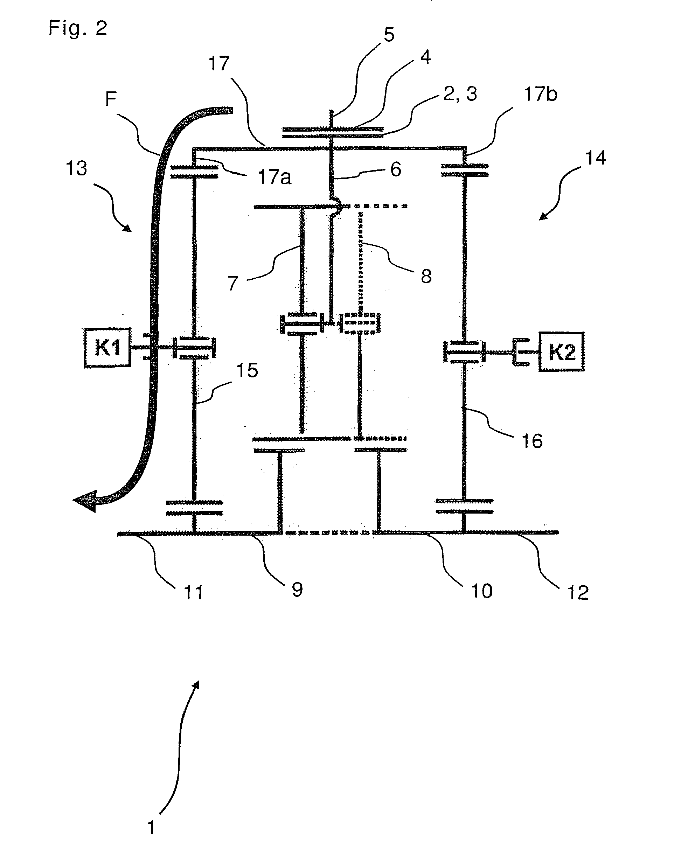

Bei der ersten nicht beanspruchten Variante gemäß Fig. 1 und Fig. 2 sind zwei Überlagerungsgetriebe 13 und 14 vorgesehen, die jeweils einen Träger mit Losrädern bzw. Planeten 15 und 16 aufweisen, die jeweils über eine Kupplung K1 bzw. K2 gegen ein Festlager (nicht dargestellt) abbrems- bzw. festlegbar sind. Der erste Träger mit dem ersten Losrad 15 bzw. mit den ersten Losrädern 15 des ersten Überlagerungsgetriebes 13 ist mit der ersten Kupplung K1 gekoppelt, während der zweite Träger mit dem zweiten Losrad 16 bzw. mit den zweiten Losrädern 16 des zweiten Überlagerungsgetriebes 14 mit der zweiten Kupplung K2 gekoppelt ist. Das erste Losrad 15 (bzw. die ersten Losräder 15) befindet/befinden sich in kämmendem Zahneingriff mit der ersten Abtriebswelle 11, während sich das zweite Losrad 16 (bzw. die zweiten Losräder 16) in kämmendem Zahneingriff mit der zweiten Abtriebswelle 12 befindet/befinden. Weiterhin befinden sich die beiden Losräder 15 und 16 in kämmendem Zahneingriff mit einem Hohlrad 17 mit Innenverzahnung, das drehfest mit dem Antriebsstirnrad 2 mit Außenverzahnung 3 verbunden ist.

Die Wirkungsweise der ersten Variante des Getriebes 1 wird anhand des Funktionsbildes der Fig. 2 näher verdeutlicht. Wichtig für die Funktion des Getriebes 1 ist, dass immer nur eines der Überlagerungsgetriebe 13 oder 14 aktiviert ist, was durch teilweises oder vollständiges Schließen einer der beiden Kupplungen K1 oder K2 erfolgen kann. Im gezeigten Funktionsbeispiel der Fig. 2 wird die zweite Kupplung K2 allmählich oder vollständig geschlossen, wodurch der Träger mit dem wenigstens einen ersten Losrad 16 der zweiten Überlagerungsstufe 14 gegen das Gehäuse, d.h., gegenüber den übrigen rotierenden Teilen abgebremst wird. Das vom Antriebsstirnrad 2 gelieferte Antriebsmoment wird in diesem Fall durch die je nach Bremswirkung der Kupplung K2 mehr oder weniger stark mit dem Hohlrad 17 bzw. mit dem Abtriebsstirnrad 2 gekoppelte zweite Abtriebswelle 12 stärker auf die erste Abtriebswelle 11 verlagert, was durch den Momentenfluss F verdeutlicht ist. Die erste Kupplung K1 muss in diesem Fall geöffnet bleiben, so dass der erste Träger mit dem wenigstens einem Losrad 15 frei zwischen dem Hohlrad 17 und der Verzahnung der ersten Abtriebswelle 11 rotieren kann. Selbstverständlich kann das Moment in entsprechender Weise durch Schließen der ersten Kupplung K1 bei geöffneter zweiter Kupplung K2 auch in gewünschter Weise an die zweite Abtriebswelle 12 geleitet werden. Der Kraftfluss erfolgt in beiden Fällen durch die Differenzialeinheit über den Planetenträger 6.

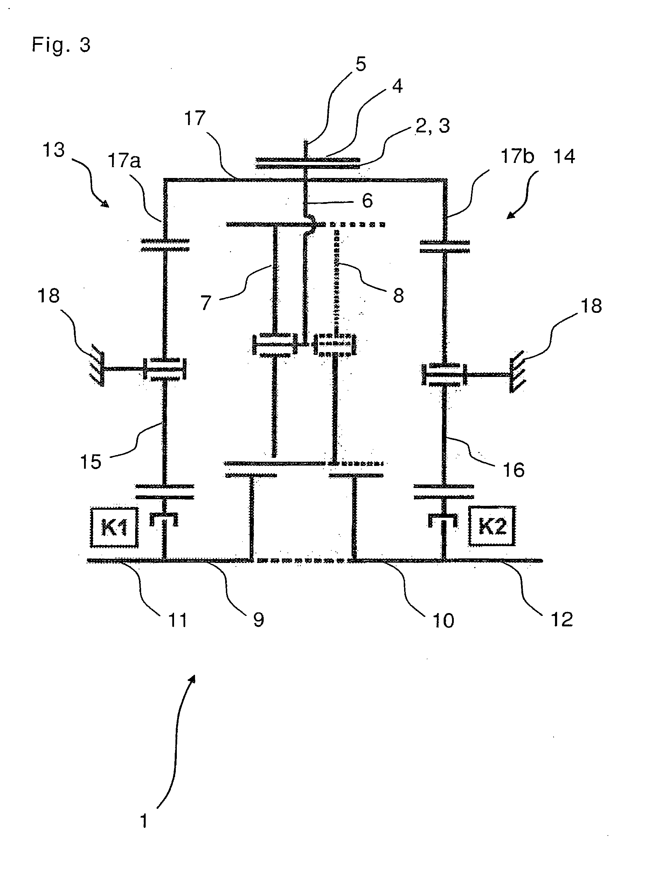

Bei dieser ersten Variante des Getriebes 1 herrscht eine relativ große Drehzahldifferenz zwischen dem Gehäuse und dem jeweils mit einer der Kupplungen K1 oder K2 abgebremsten ersten oder zweiten Träger für die Hohlräder 15 bzw. 16. Um diese Drehzahldifferenzen zu reduzieren und damit geringere Bauteilbelastungen und Wärmeentwicklungen zu erzielen, haben sich die nachfolgend beschriebenen Varianten entsprechend der Figuren 3 bis 6 als besonders vorteilhaft herausgestellt.

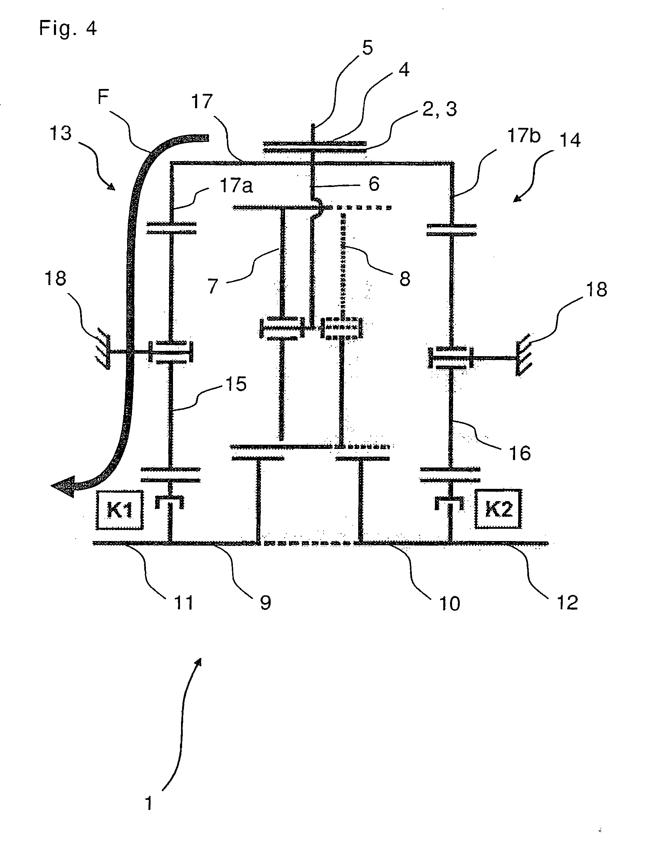

Die schematische Darstellung der Fig. 3 zeigt ein Funktionsprinzip einer zweiten erfindungsgemäßen Variante eines Planeten-Differenzialgetriebes 1. Bei dieser zweiten Variante gemäß Fig. 3 und Fig. 4 sind wiederum zwei Überlagerungsgetriebe 13 und 14 vorgesehen, die jeweils einen Träger mit Losrädern 15 bzw. 16 aufweisen, die jeweils gegenüber einem Gehäuseabschnitt 18 gelagert sind. Bei der zweiten Getriebevariante sind jedoch jeweils Kupplungen K1 bzw. K2 zwischen Losrad 15 bzw. 16 und der jeweiligen Abtriebswelle 11 bzw. 12 vorgesehen, so dass wahlweise eines der Losräder 15 oder 16 mittels der zugehörigen Kupplung K1 oder K2 gegen die entsprechende Abtriebswelle 11 bzw. 12 abbrems- bzw. festlegbar ist. Das erste Losrad 15 (bzw. die ersten Losräder 15) befindet/befinden sich in kämmendem Zahneingriff mit der ersten Abtriebswelle 11, während sich das zweite Losrad 16 (bzw. die zweiten Losräder 16) in kämmendem Zahneingriff mit der zweiten Abtriebswelle 12 befindet/befinden. Weiterhin befinden sich die beiden Losräder 15 und 16 in kämmendem Zahneingriff mit einem Hohlrad 17 mit Innenverzahnung, das drehfest mit dem Antriebsstirnrad 2 mit Außenverzahnung 3 verbunden ist. Das erste Losrad 15 des ersten Überlagerungsgetriebes 13 ist über die erste Kupplung K1 mit der ersten Abtriebswelle 11 koppelbar, während das zweite Losrad 16 des zweiten Überlagerungsgetriebes 14 über die zweite Kupplung K2 mit der zweiten Abtriebswelle 12 koppelbar ist.

Die Wirkungsweise der zweiten Variante des Getriebes 1 wird anhand des Funktionsbildes der Fig. 4 näher verdeutlicht. Wichtig für die Funktion des Getriebes 1 ist, dass immer nur eines der Überlagerungsgetriebe 13 oder 14 aktiviert ist, was durch teilweises oder vollständiges Schließen einer der beiden Kupplungen K1 oder K2 erfolgen kann. Im gezeigten Funktionsbeispiel der Fig. 4 wird die zweite Kupplung K2 allmählich oder vollständig geschlossen, wodurch das zweite Losrad 16 der zweiten Überlagerungsstufe 14 mit der zweiten Abtriebswelle 12 gekoppelt wird. Das vom Antriebsstirnrad 2 gelieferte Antriebsmoment wird in diesem Fall durch die je nach Bremswirkung der zweiten Kupplung K2 mehr oder weniger stark mit dem Hohlrad 17 bzw. mit dem Abtriebsstirnrad 2 gekoppelten zweiten Abtriebswelle 12 stärker auf die erste Abtriebswelle 11 verlagert, was durch den Momentenflusspfeil F verdeutlicht ist. Die erste Kupplung K1 muss in diesem Fall geöffnet bleiben, so dass das erste Losrad 13 frei zwischen dem Hohlrad 17 und der Verzahnung der ersten Abtriebswelle 11 rotieren kann. Selbstverständlich kann das Moment in entsprechender Weise durch Schließen der ersten Kupplung K1 bei geöffneter zweiter Kupplung K2 auch in gewünschter Weise an die erste Abtriebswelle 11 geleitet werden.

Während des beschriebenen Kupplungsvorganges treten an der zweiten Kupplung K2 geringere Differenzdrehzahlen auf als bei einer der Kupplungen K1 oder K2 bei der ersten Getriebevariante gemäß Figuren 1 und 2, so dass die zweite Ausführungsvariante geringere Bauteilbelastungen, geringeren Verschleiß und damit insgesamt günstigere Betriebsbedingungen verspricht. Bei einer gegebenen Gesamtübersetzung der Planetenstufe von i = 1,2 und einer beispielhaften Raddrehzahl von 500 1/min wird die jeweils aktivierte Kupplung K1 oder K2 lediglich mit einer Differenzdrehzahl von 100 1/min beaufschlagt, während das in den Figuren 1 und 2 dargestellte Konzept, mit Bremsen Differenzdrehzahlen von bis zu 500 1/min aufweisen.

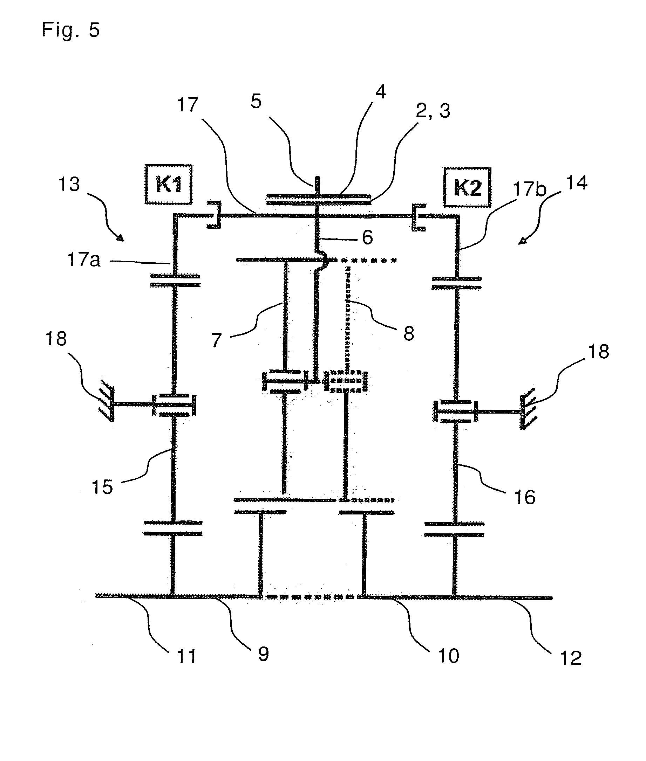

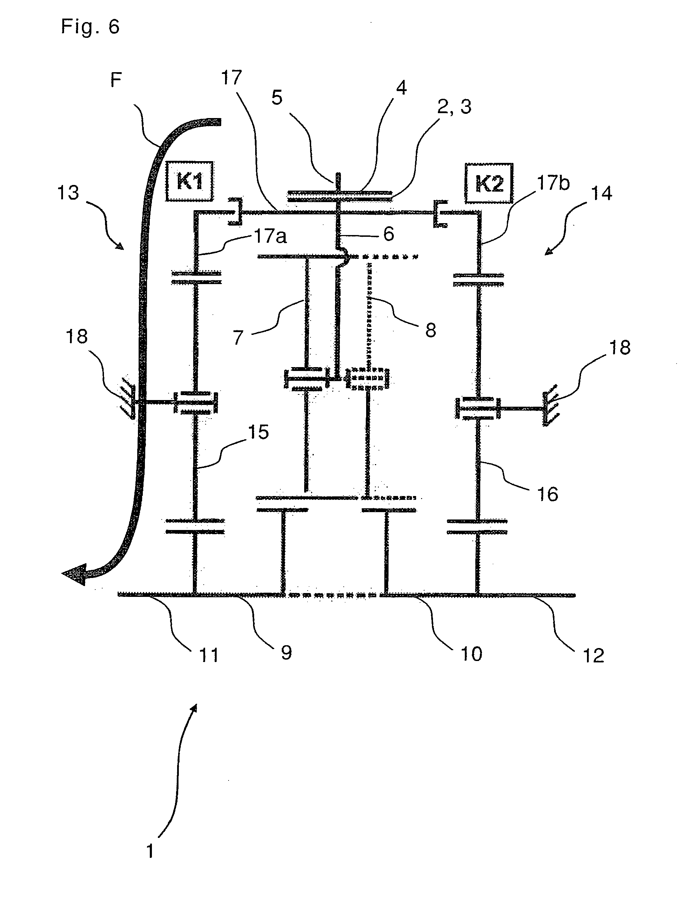

Die schematische Darstellung der Fig. 5 zeigt ein Funktionsprinzip einer nicht beanspruchten dritten Variante eines Planeten-Differenzialgetriebes 1. Bei dieser dritten Variante gemäß Fig. 5 und Fig. 6 sind wiederum zwei Überlagerungsgetriebe 13 und 14 vorgesehen, die jeweils einen Träger mit Losrädern 15 bzw. 16 aufweisen, die jeweils gegenüber einem Gehäuseabschnitt 18 gelagert sind. Bei der dritten Getriebevariante sind jedoch jeweils Kupplungen K1 bzw. K2 zwischen den Hohlrädern 17a und 17b und dem gemeinsamen Antriebsstirnrad 2 vorgesehen, so dass wahlweise eines der Hohlräder 17a oder 17b mittels der zugehörigen Kupplung K1 oder K2 gegen das Antriebsrad 2 abbrems- bzw. festlegbar ist. Das erste Losrad 15 (bzw. die ersten Losräder 15) befindet/befinden sich in kämmendem Zahneingriff mit der ersten Abtriebswelle 11, während sich das zweite Losrad 16 (bzw. die zweiten Losräder 16) in kämmendem Zahneingriff mit der zweiten Abtriebswelle 12 befindet/befinden. Weiterhin befinden sich die beiden Losräder 15 und 16 in kämmendem Zahneingriff mit einem Hohlrad 17a und 17b mit Innenverzahnung, die über Kupplungen K1 und K2 mit dem Antriebsstirnrad 2 mit Außenverzahnung 3 verbunden sind.

Die Wirkungsweise der dritten Variante des Getriebes 1 wird anhand des Funktionsbildes der Fig. 6 näher verdeutlicht. Wichtig für die Funktion des Getriebes 1 ist, dass immer nur eines der Überlagerungsgetriebe 13 oder 14 aktiviert ist, was durch teilweises oder vollständiges Schließen einer der beiden Kupplungen K1 oder K2 erfolgen kann. Im gezeigten Funktionsbeispiel der Fig. 6 wird die zweite Kupplung K2 allmählich oder vollständig geschlossen, wodurch das Antriebsstirnrad 2 mit dem Hohlrad 17b gekoppelt wird. Das vom Antriebsstirnrad 2 gelieferte Antriebsmoment wird in diesem Fall durch die zweite Kupplung K2 mehr oder weniger stark auf die erste Antriebswelle 11 verlagert, was durch den Momentenflusspfeil F verdeutlicht ist. Die erste Kupplung K1 muss in diesem Fall geöffnet bleiben, so dass das erste Hohlrad 17a frei rotieren kann. Selbstverständlich kann das Moment in entsprechender Weise durch Schließen der ersten Kupplung K1 bei geöffneter zweiter Kupplung K2 auch in gewünschter Weise an die zweite Abtriebswelle 12 geleitet werden.

Während des beschriebenen Kupplungsvorganges treten an der zweiten Kupplung K2 geringere Differenzdrehzahlen auf als bei einer der Kupplungen K1 oder K2 bei der ersten Getriebevariante gemäß Figuren 1 und 2 so dass die dritte Ausführungsvariante geringere Bauteilbelastungen, geringeren Verschleiß und damit günstigere Betriebsbedingungen verspricht. Bei einer gegebenen Gesamtübersetzung der Planetenstufe von i = 1,2 und einer beispielhaften Raddrehzahl von 500 1/min liegt am Hohlrad der Überlagerungsstufe eine Drehzahl an der jeweils aktivierten Kupplung von etwa 417 1/min an. Somit liegt die Differenzdrehzahl an der Kupplung bei einer Drehzahl von 500 1/min der Abtriebswellen sogar noch geringfügig unterhalb der Differenzialdrehzahl der zweiten Getriebevariante.

Die Erfindung ist nicht auf das zweite Ausführungsbeispiel beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichen liste

- 1: Planeten-Differenzialgetriebe
- 2: Antriebsstirnrad
- 3: Außenverzahnung
- 4: Zahnrad
- 5: Getriebeausgangswelle
- 6: Planetenträger
- 7: erste Planeten
- 8: zweite Planeten
- 9: erstes Sonnenrad
- 10: zweites Sonnenrad
- 11: erste Abtriebswelle
- 12: zweite Abtriebswelle
- 13: erste Überlagerungsstufe
- 14: zweite Überlagerungsstufe
- 15: erstes Losrad
- 16: zweites Losrad
- 17a: erstes Hohlrad
- 17b: zweites Hohlrad
- 18: Gehäuseabschnitt

- K1: erste Kupplung
- K2: zweite Kupplung
- F: Momentenfluss

## Patentansprüche

1. Planeten-Differenzialgetriebe (1) mit einem Antriebsstirnrad (2) mit Außenverzahnung (3) und einem drehfest damit verbundenem, im Nabenbereich des Antriebsstirnrades (2) angeordnetem Planetenträger (6), der wenigstens ein Paar miteinander kämmender Planetenzahnräder (7, 8) trägt, wobei jedes der wenigstens zwei Planetenzahnräder (7, 8) mit jeweils einem, jeweils drehfest mit einer Abtriebswelle (11, 12) verbundenem Sonnenrad (9, 10) mit Außenverzahnung in kämmendem Eingriff steht, **dadurch gekennzeichnet, *dass*** *zwei Überlagerungsstufen (13*, *14)* vorgesehen sind, *wobei jede der Überlagerungsstufen (13*, *14)* ein Losrad (15, 16) umfasst, das jeweils mit einer der Abtriebswellen (11, 12) und mit einem, drehfest mit dem Antriebsstirnrad (2) gekoppelten Hohlrad (17) in kämmendem Eingriff steht, wobei die jeweilige Überlagerungsstufe (13, 14) wenigstens eine steuerbare Kupplung (K1, K2) zur variablen Abbremsung des *jeweiligen* Losrades (15, 16) gegenüber der Abtriebswelle (11, 12) umfasst.

2. Planeten-Differenzialgetriebe nach Ansprüch 1, **dadurch gekennzeichnet dass** insgesamt zwei, drei oder vier steuerbare Kupplungen (K1, K2) vorgesehen sind.

3. Planeten-Differenzialgetriebe nach einem der Ansprüche 1 bis 2, **dadurch gekennzeichnet, dass** jede der Kupplungen (K1, K2) stufenlos in ihrem Schlupfgrad einstellbar ist.

4. Planeten-Differenzialgetriebe nach einem der Ansprüche 1 bis 3, **dadurch gekennzeichnet, dass** jede der Kupplungen (K1, K2) separat hinsichtlich ihres Schlupfgrades steuerbar ist.

5. Verfahren zum Betrieb eines Planeten-Differenzialgetriebes gemäß einem der Ansprüche 1 bis 4, bei dem fahrzeugdynamische Parameter erfasst und in Abhängigkeit wenigstens eines Parameters jeweils eine Kupplung (K1, K2) innerhalb eines der Überlagerungsgetriebe (13, 14) zur variablen Abbremsung des der Kupplung (K1, K2) zugeordneten Losrades (15, 16) und zur Umleitung eines Antriebsmomentes vom Antriebsstirnrad (2) auf eine der Abtriebswellen (11, 12) angesteuert wird.

6. Verfahren nach Anspruch 5, **dadurch gekennzeichnet dass** beide Kupplungen (K1, K2) zur individuellen Verteilung der Momente zwischen den beiden Abtriebswellen (11, 12) variabel und getrennt voneinander, jedoch nicht gleichzeitig angesteuert werden.

## Claims

1. Planetary differential gearing (1) having a drive spur gear (2) with external toothing (3) and a planetary carrier (6) which is connected thereto in a rotationally fixed fashion, arranged in the hub region of the drive spur gear (2) and has at least one pair of planetary gears (7, 8) which mesh with one another, wherein each of the at least two planetary gears (7, 8) are in meshing engagement with in each case one sun gear (9, 10) which is connected in each case in a rotationally fixed fashion to an output shaft (11, 12) and has external toothing, **characterized in that** two superimposition gear stages (13, 14) are provided, wherein each of the superimposition gear stages (13, 14) comprises an idler gear (15, 16) which is in meshing engagement in each case with one of the output shafts (11, 12) and with a ring gear (17) which is coupled in a rotationally fixed fashion to the drive spur gear (2), wherein the respective superimposition gear stage (13, 14) comprises at least one controllable clutch (K1, K2) for variably braking the respective idler gear (15, 16) with respect to the output shaft (11, 12).

2. Planetary differential gearing according to Claim 1, **characterized in that** a total of two, three or four controllable clutches (K1, K2) are provided.

3. Planetary differential gearing according to one of Claims 1 to 2, **characterized in that** each of the clutches (K1, K2) can be adjusted in terms of its degree of slip in an infinitely variable fashion.

4. Planetary differential gearing according to one of Claims 1 to 3, **characterized in that** each of the clutches (K1, K2) can be controlled separately in terms of its degree of slip.

5. Method for operating a planetary differential gearing according to one of Claims 1 to 4, in which vehicle-dynamic parameters are detected and in each case a clutch (K1, K2) within one of the superimposition gearings (13, 14) is actuated as a function of at least one parameter in order to variably brake the idler gear (15, 16), assigned to the clutch (K1, K2), and to divert a drive torque from the drive spur gear (2) to one of the output shafts (11, 12).

6. Method according to Claim 5, **characterized in that** both clutches (K1, K2) are actuated variably and separately from one another, but not simultaneously, in order to distribute the torques individually between the two output shafts (11, 12).

## Revendications

1. Transmission différentielle à engrenages planétaires (1) comprenant un pignon droit d'entraînement (2) avec une denture extérieure (3) et un porte-satellites (6) connecté de manière solidaire en rotation à celui-ci, disposé dans la région du moyeu du pignon droit d'entraînement (2), qui porte au moins une paire de roues dentées planétaires (7, 8) s'engrenant l'une dans l'autre, chacune des au moins deux roues dentées planétaires (7, 8) étant en prise d'engrènement par une denture extérieure avec à chaque fois une roue solaire (9, 10) connectée respectivement de manière solidaire en rotation à un arbre de sortie (11, 12), **caractérisée en ce que** deux étages de superposition (13, 14) sont prévus, chacun des étages de superposition (13, 14) comprenant un pignon fou (15, 16) qui est en prise d'engrènement à chaque fois avec l'un des arbres de sortie (11, 12) et avec une couronne dentée (17) accouplée de manière solidaire en rotation au pignon droit d'entraînement (2), l'étage de superposition respectif (13, 14) comprenant au moins un embrayage commandable (K1, K2) pour freiner de manière variable le pignon fou respectif (15, 16) par rapport à l'arbre de sortie (11, 12).

2. Transmission différentielle à engrenages planétaires selon la revendication 1, **caractérisée en ce que** deux, trois ou quatre embrayages commandables (K1, K2) sont prévus au total.

3. Transmission différentielle à engrenages planétaires selon l'une quelconque des revendications 1 ou 2, **caractérisée en ce que** le degré de glissement de chacun des embrayages (K1, K2) peut être ajusté de manière continue.

4. Transmission différentielle à engrenages planétaires selon l'une quelconque des revendications 1 à 3, **caractérisée en ce que** chacun des embrayages (K1, K2) peut être commandé séparément en ce qui concerne son degré de glissement.

5. Procédé pour faire fonctionner une transmission différentielle à engrenages planétaires selon l'une quelconque des revendications 1 à 4, dans lequel on détecte des paramètres dynamiques du véhicule et en fonction d'au moins un paramètre, à chaque fois un embrayage (K1, K2) est commandé à l'intérieur de l'un des engrenages de superposition (13, 14) en vue du freinage variable du pignon fou (15, 16) associé à l'embrayage (K1, K2) et en vue de transférer un couple d'entraînement du pignon droit d'entraînement (2) à l'un des arbres de sortie (11, 12).

6. Procédé selon la revendication 5, **caractérisé en ce que** les deux embrayages (K1, K2) sont commandés de manière variable séparément l'un de l'autre mais pas simultanément afin de répartir de manière individuelle les couples entre les deux arbres de sortie (11, 12).
